# EUROPEAN PATENT APPLICATION

(11) **EP 1 555 739 A1**
(43) Date of publication of application: **20.07.2005**
(21) Application number: 04025931.9
(22) Date of filing: 02.11.2004
(51) Int. Cl.: H02K 21/22, H02K 9/06

(54) **Self-ventilating magneto-generator**

(30) Priority: 15.01.2004 IT MI20040038
(71) Applicant: DUCATI ENERGIA S.p.A., 40132 Bologna (IT)
(72) Inventor: Fucili, Mirco, 40132 Bologna (IT); Magri, Marco, 40129 Bologna (IT); Regazzi, Gianni, 40050 Funo di Argelato (BO) (IT)
(74) Representative: Coloberti, Luigi, Ing.

(57) **Abstract**

The permanent magneto-generator (10) for internal combustion engines, comprises a permanent magnet rotor (12) rotatably supported and coaxially arranged to a stator (11); the rotor (12) has a cylindrical peripheral wall (18) and a bottom wall (16), provided with ventilation through holes (21). The rotor (12) also comprises a plurality of cup-shaped vanes (22) for conveying air into the generator (10), which extend outside from the bottom wall (16) along at least part of each ventilating hole (21).

## Description

### BACKGROUND OF THE INVENTION

This invention relates to a voltage magneto-generator, used in particular in combination with two and four-stroke internal combustion engines, for example in the field of motorcycles and similar applications.

### STATE OF THE ART

A magneto-generator usually is connected to the shaft of an internal combustion engine of a vehicle, for producing the electric current necessary for powering electric loads and for charging the battery of the vehicle.

Conventionally, a magneto-generator comprises a stator having a magnetic structure, and an electric winding defining a first system of magnetic poles; a rotor of permanent magnet type is rotatably supported coaxially arranged to the stator, the rotor in turn having a magnetic structure defining a second system of poles magnetically linked to the pole system of the stator.

The rotor, which is connected to the drive shaft, due to its rotation induces a voltage in the field winding of the stator and the consequent current necessary for powering the electric loads and charging the battery of the vehicle.

The electric current, flowing through the field winding of the stator, generates heat; this leads to an increase in the temperature of the stator, which causes deterioration of the characteristics of the materials, as well as a reduction in the efficiency of the generator.

However, since the rotor is directly connected to the drive shaft of the engine, it also performs the function of a flywheel mass, and consequently its dimensions and its weight are limited by the characteristics and the performances of the engine itself; the dimensioning of the electric generator also depends upon the entity of the electric loads necessary to the operation of the vehicle.

These design restrictions, especially in the case of high-performance road vehicles, affect the temperature conditions of the generator, in that the need to reduce its overall dimensions by making use of small-sized stators, together with the need to produce considerable quantities of current for the various electric loads, give rise respectively to a poor capacity to eliminate the heat, and high densities of current in the winding of the stator, with a consequent high generation of heat.

Therefore, it is necessary to improve at design level, to increase the heat dispersing capacity in order to maintain the maximum working temperature of the generator within safety limits, so as to avoid jeopardising its operating efficiency. For this purpose, use of a plurality of holes or vanes in the rotor has variously been suggested in order to dissipate heat. These solutions, taken individually, however do not prove to have a suitable efficiency in that they do not make it possible to create an air flow of a sufficient capacity for the cooling degree required by the electrical winding of the voltage generator.

US-A-2003/222520, suggests the use of a magneto-generator comprising a cup-shaped rotor having a bottom wall and a peripheral wall on the internal side of which a plurality of magnets are side by side arranged. The aforesaid rotor is provided with a set of ventilating through holes made in a region of the rotor disposed between the peripheral wall and the bottom wall, so as to partially extend on the same walls. The rotor is also provided with a plurality of radially oriented vanes which extend from the bottom wall in the direction in which the peripheral wall of the rotor extends. The vanes make it possible to create an air flow from the inner to the outer side of the rotor, through the ventilating holes during the rotation.

A similar solution however proves to be structurally complex in that it is necessary to carry out additional mechanical operations for creating and positioning the vanes in the rotor, which would in any case prove to be an added or inserted part compared to a conventional rotor.

Moreover, the air flow would in any case be of limited value, in that it is created by vacuum due to the rotation of the rotor; in addition the vanes are of small dimensions, being restricted by the overall dimensions of the stator inside the rotor.

### OBJECTS OF THE INVENTION

The object of this invention is to provide a magneto-generator of the aforementioned kind, which is structurally simple, and which ensures an efficient heat dissipation, also in the event of the magneto-generator having limited dimensions and designed to produce high values of electric current.

### BRIEF DESCRIPTION OF THE INVENTION

The above can be achieved by means of a magneto-generator for internal combustion engines, of the type comprising:
- a stator having a first magnetic structure and an electric winding defining a first system of poles;
- a permanent magnet rotor rotatably supported and coaxially arranged to the stator to rotate in one direction, the rotor in turn comprising a magnetic structure defining a second system of poles magnetically linked to the pole system of the stator,
   said rotor having a cylindrically-shaped peripheral wall and a bottom wall having a supporting hub; and
- ventilating means comprising a plurality of through holes in the bottom wall of the rotor, and ventilating vanes,
characterised in that said ventilating through holes are provided in the bottom wall of the rotor between the supporting hub and the peripheral wall of the rotor; and
comprising a plurality of forwardly slanted vanes for conveying an air flow inside of the generator, said vanes extending outside from the bottom wall of the rotor along at least part of each ventilating hole.

### BRIEF DESCRIPTION OF THE DRAWINGS

These and further features of the magneto-generator according to this invention, will be more clearly evident from the following description with reference to the accompanying drawings, in which:

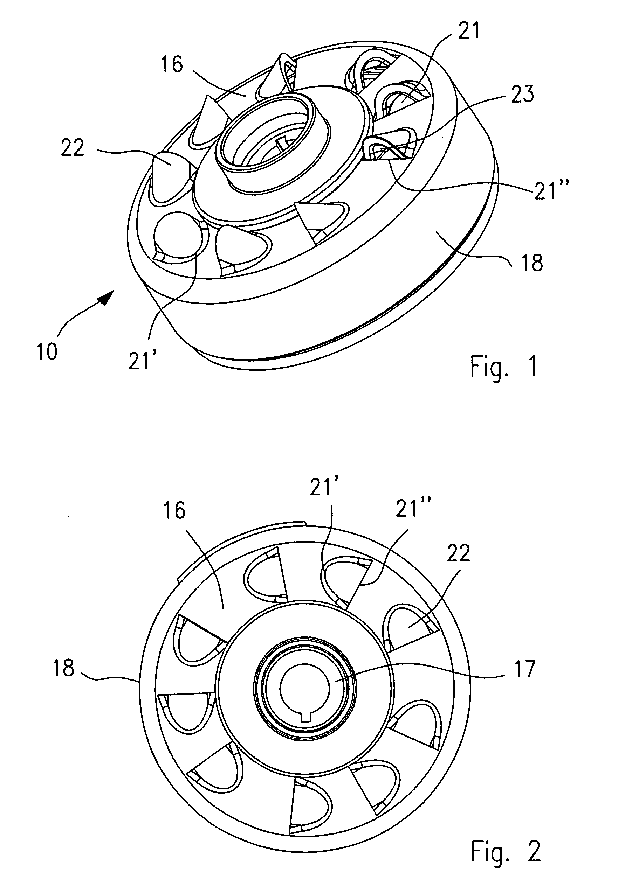

- Fig. 1 shows a perspective view of a magneto-generator according to the invention;
- Fig. 2 shows a top view of the magneto-generator of Fig. 1;
- Fig. 3 shows a cross-sectional view of the magneto-generator of Fig. 1, along the line 3-3 of Fig. 2;
- Fig. 4 shows an enlarged cutaway view of an air conveying vane.

### DETAILED DESCRIPTION OF THE INVENTION

The general features of this invention will be illustrated hereunder by means of an exemplificative embodiment.

Figures from 1 to 4 show a magneto-generator 10 according to this invention, which comprises a stator 11 and a rotor 12 disposed coaxially to each other.

The stator 11 comprises a first magnetic structure defining a first system of radially disposed poles; in particular, the poles are obtained from a pack of appropriately shaped magnetic laminations 13 onto which individual coils are wound respective reels 14, the coils being electrically connected together to form an electric winding 15.

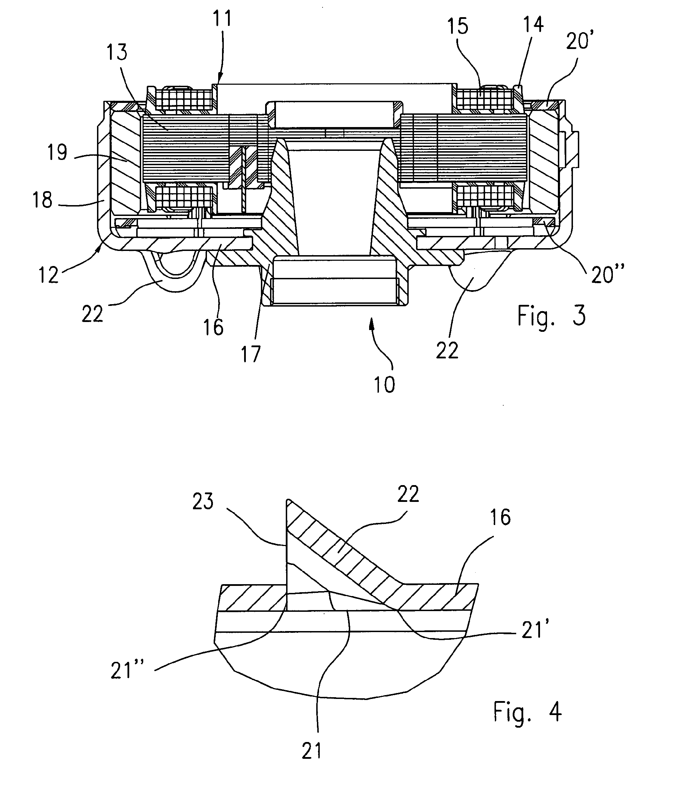

As shown in fig. 3, the rotor 12 comprises a bottom wall 16 having a supporting hub 17 for securing it to a drive shaft, not shown, of a two or four-stroke internal combustion engine, for example of a motor vehicle, in such a way that the rotor 12 is made to rotate coaxially to the stator 11 in one rotational directional. The rotor 12 also comprises a cylindrically-shaped peripheral wall 18, on the inside of which a plurality of permanent magnets are secured and assembled so as to form a magnetic ring 19 defining a second magnetic structure which is maintained in an axial position by means of annular rings 20',20'' of plastic material.

The magnets of the ring 19 of the rotor 12 are radially magnetised to form a second system of poles magnetically linked to the pole system of the stator 11; in particular, the poles of the ring 19 have alternating poles of opposite polarities, which occur in succession around the entire periphery of the same ring 19.

Each pole of the stator 11 is provided with a polar surface facing the magnetic ring 19 of the rotor 12, in such a way that the rotation of the rotor 12 induces a voltage which enables the electric current of the generator 10 to flow through the field winding 15, for powering electric loads and charging the battery of the motor vehicle.

The magneto-generator 10 also comprises ventilating means, provided by a plurality of through holes 21 in the rotor 12 for the ventilation of the generator 10.

In particular, the through holes 21 are provided around the bottom wall 16 of the rotor 12 in a position between the supporting hub 17 and the peripheral wall 18.

The generator 10 also comprises a plurality of slanted cup-shaped vanes 22 for conveying the ventilating air inside the generator 10 by the through holes 21.

The air conveying vanes 22 in particular extend outside the bottom wall 16 of the rotor 12 along at least part of each ventilating hole 21, starting from a rear edge 21', forward, in the rotational direction of the rotor 12.

In the event of the rotor 12 is rotating in the reverse direction, it is necessary for the air conveying vanes 22 to be slanted in the opposite direction, compared to the preceding case.

Each air conveying vane 22 preferentially is cup-shape, obtained by drawing the same vanes from radial cuts in the bottom wall 16, such operation being simple to carry out and does not involve the addition of supplementary parts to the rotor 12 to form the vanes 22, while at the same time maintaining characteristics of high mechanical tensile strength.

The aforesaid radial cut in this case defines a rectilinear fore edge 21" of the ventilating hole 21.

Preferentially, each air conveying vane 22 is provided with a fore edge which defines an aperture 23 passage of air towards a corresponding ventilating hole 21, which aperture 23 lies in a radial plane of the rotor 12.

The air conveying vanes 22 and the corresponding ventilating holes 21 are circumferentially arranged around the hub 17 of the bottom wall 16, and can be disposed at even angular space from one another or, alternatively, in groups, depending upon the structural requirements for the rotor 12.

An electric magneto-generator 10 according to this invention is therefore of the self-ventilating type in that, during the rotation of the rotor 12, the vanes 22 convey air from the outside towards the inside, cooling the winding 15 of the stator 11, so as to efficiently reducing the working temperature of the generator 10.

From the foregoing, what has been described and shown with reference to the accompanying drawings, has been given purely by way of example in order to illustrate the general features of the invention, as well as several of its embodiments; consequently other modifications and variations to the self-ventilating magneto-generator are possible, without thereby departing from the scope of the appended claims.

## Claims

1. A magneto-generator (10) for internal combustion engines, of the type comprising:
- a stator (11) having a first magnetic structure and an electric winding (15) defining a first system of poles;
- a permanent rotor (12) magnet type rotatably supported and coaxially arranged to the stator (11) rotate in one direction, the rotor (12) in turn comprising a magnetic structure defining a second system of poles magnetically linked to the pole system of the stator (11) ,
the rotor (12) having a cylindrically-shaped peripheral wall (18), and a bottom wall (16) having a supporting hub (17); and
- ventilating means comprising a plurality of through holes (21) in the bottom wall (16) of the rotor (12) and ventilating vanes (22),
**characterised in that** said ventilating through holes (21) are provided in the bottom wall (16) of the rotor (12) between the supporting hub (17) and the peripheral wall (18) of the rotor (12); and
comprising a plurality of forwardly slanted air vanes (22) for conveying air inside the generator (10), said air vanes (22) extend externally to the bottom wall (16) of the rotor (12) along at least part of each ventilating hole (21).

2. A magneto-generator (10) according to claim 1, **characterised in that** each air conveying vane (22) is in the form of a cup-shaped vane.

3. A magneto-generator (10) according to claim 2, **characterised in that** each air ventilating hole (21) has a front edge (21'') arranged in a radial plane.

4. A magneto-generator (10) according to claim 2, **characterised in that** each air conveying vane (22) has a front edge defining an aperture (23) for passage of air towards a corresponding ventilating hole (21), said air passage aperture (23) lying in a radial plane.

5. A magneto-generator (10) according to claim 1, **characterised in that** the air conveying vanes (22) and the corresponding ventilating holes (21) are circumferentially arranged around the rotor hub (17), at even angular space from one another.

6. A magneto-generator (10) according to claim 1, **characterised in that** the air conveying vanes (22) and the corresponding ventilating holes (21) are circumferentially disposed in groups, around the rotor hub (17).
